# EUROPEAN PATENT APPLICATION

(11) **EP 3 081 764 A1**
(43) Date of publication of application: **19.10.2016**
(21) Application number: 16165199.7
(22) Date of filing: 14.04.2016
(51) Int. Cl.: F01D 11/12

(54) **VARIABLE COATING POROSITY TO INFLUENCE SHROUD AND ROTOR DURABILITY**

(30) Priority: 17.04.2015 US 201514689354
(71) Applicant: General Electric Company, Schenectady, NY 12345 (US)
(72) Inventor: BALDIGA, Jonathan David, Lynn, MA Massachusetts 01910 (US); STAPLETON, David Scott, Lynn, MA Massachusetts 01910 (US)
(74) Representative: Pöpper, Evamaria

(57) **Abstract**

A variable density coating system (81) on a component (100) is provided. In one embodiment, the variable density coating system (81) comprises: an external coating (104) on the component (100), where the external coating (104) has a first density area (90) and a second density area (92) with the first density area (90) being more dense than the second density area (92). A gas turbine engine (10) is also provided that includes a CMC component (100) with the variable density coating system (81) thereon.

## Description

### FIELD OF THE INVENTION

The present subject matter relates generally to turbine shrouds and turbine rotors, more particularly, to a coating system to influence shroud and rotor durability and other properties.

### BACKGROUND OF THE INVENTION

The turbine section of a gas turbine engine contains a rotor shaft and one or more turbine stages, each having a turbine disk (or rotor) mounted or otherwise carried by the shaft and turbine blades mounted to and radially extending from the periphery of the disk. A turbine assembly typically generates rotating shaft power by expanding hot compressed gas produced by combustion of a fuel. Gas turbine buckets or blades generally have an airfoil shape designed to convert the thermal and kinetic energy of the flow path gases into mechanical rotation of the rotor.

Turbine performance and efficiency may be enhanced by reducing the space between the tip of the rotating blade and the stationary shroud to limit the flow of air over or around the top of the blade that would otherwise bypass the blade. For example, a blade may be configured so that its tip fits close to the shroud during engine operation. Thus, generating and maintaining an efficient tip clearance is particularly desired for efficiency purposes.

Although turbine blades may be made of a number of superalloys (e.g., nickel-based superalloys), ceramic matrix composites (CMCs) are an attractive alternative to nickel-based superalloys for turbine applications because of their high temperature capability and light weight. However, CMC components must be protected with an environmental barrier coating (EBC) in turbine engine environments to avoid severe oxidation and recession in the presence of high temperature steam.

Thus, in certain components, regions of the EBC may be susceptible to wear due to rub events with adjacent components. For example, for the CMC blade, the EBC at the blade tip is susceptible to rub against metal shroud components. If the EBC coating wears away, the CMC blade is then open to recessive attack from high temperature steam that will open up the clearance between the CMC blade tip and the metal shroud, thereby reducing the efficiency of the engine.

Thus, it is desirable in the art to provide materials and methods for reducing EBC wear on a CMC blade tip caused by a rub event during operation of a turbine.

### BRIEF DESCRIPTION OF THE INVENTION

Aspects and advantages of the invention will be set forth in part in the following description, or may be obvious from the description, or may be learned through practice of the invention.

A variable density coating system on a component (e.g., a CMC component) is generally provided. In one embodiment, the variable density coating system comprises: an external coating on the component, where the external coating has a first density area and a second density area with the first density area being more dense than the second density area.

A gas turbine engine is also generally provided. In one embodiment, the gas turbine engine comprises a compressor; a combustion section; a turbine; and a shroud assembly disposed in one of the compressor or the turbine. The shroud assembly comprising a ceramic matrix composite having an external coating thereon, where the external coating has a first density area and a second density area, with the first density area being more dense than the second density area.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a cross-sectional view of one embodiment of a gas turbine engine that may be utilized within an aircraft in accordance with aspects of the present subject matter;
FIG. 2 illustrates a cross-sectional view of one embodiment of a turbine configuration suitable for use within the gas turbine engine shown in FIG. 1;
FIG. 3 shows a flowpath surface of an exemplary shroud having a variable density coating system according to one embodiment of the present subject matter; and
FIG. 4 shows a cross-sectional view of the exemplary shroud of FIG. 3.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

A variable density coating system for CMC is generally provided, along with the resulting components and methods of its application. By controlling the density of the coating system, the properties of the coating can be tuned locally on a component to allow greater sensitivity of maximizing hardware durability. That is, the coating porosity can be modified at discreet locations on a component to tune thermal, rub, and erosion resistance properties. The variable density coating system is particularly useful for influencing stator and rotor durability due to blade-shroud rub events, thermal stresses created at extreme temperatures and/or temperature changes, etc.

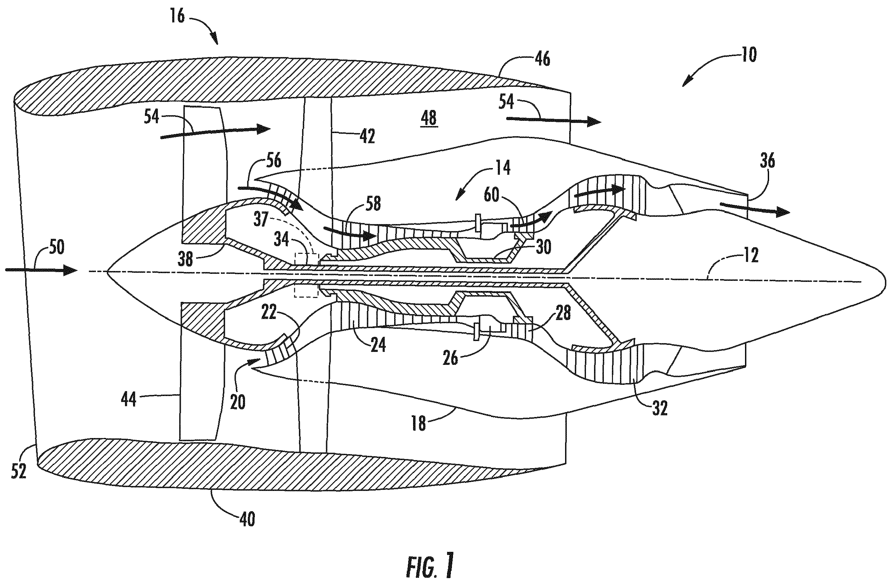

Referring now to the drawings, FIG. 1 illustrates a cross-sectional view of one embodiment of a gas turbine engine 10 that may be utilized within an aircraft in accordance with aspects of the present subject matter, with the engine 10 being shown having a longitudinal or axial centerline axis 12 extending there through for reference purposes. In general, the engine 10 may include a core gas turbine engine (indicated generally by reference character 14) and a fan section 16 positioned upstream thereof. The core engine 14 may generally include a substantially tubular outer casing 18 that defines an annular inlet 20. In addition, the outer casing 18 may further enclose and support a booster compressor 22 for increasing the pressure of the air that enters the core engine 14 to a first pressure level. A high pressure, multi-stage, axial-flow compressor 24 may then receive the pressurized air from the booster compressor 22 and further increase the pressure of such air. The pressurized air exiting the high-pressure compressor 24 may then flow to a combustor 26 within which fuel is injected into the flow of pressurized air, with the resulting mixture being combusted within the combustor 26. The high energy combustion products are directed from the combustor 26 along the hot gas path of the engine 10 to a first (high pressure) turbine 28 for driving the high pressure compressor 24 via a first (high pressure) drive shaft 30, and then to a second (low pressure) turbine 32 for driving the booster compressor 22 and fan section 16 via a second (low pressure) drive shaft 34 that is generally coaxial with first drive shaft 30. After driving each of turbines 28 and 32, the combustion products may be expelled from the core engine 14 via an exhaust nozzle 36 to provide propulsive jet thrust.

It should be appreciated that each turbine 28, 30 may generally include one or more turbine stages, with each stage including a turbine nozzle (not shown in FIG. 1) and a downstream turbine rotor (not shown in FIG. 1). As will be described below, the turbine nozzle may include a plurality of vanes disposed in an annular array about the centerline axis 12 of the engine 10 for turning or otherwise directing the flow of combustion products through the turbine stage towards a corresponding annular array of rotor blades forming part of the turbine rotor. As is generally understood, the rotor blades may be coupled to a rotor disk of the turbine rotor, which is, in turn, rotationally coupled to the turbine's drive shaft (e.g., drive shaft 30 or 34).

Additionally, as shown in FIG. 1, the fan section 16 of the engine 10 may generally include a rotatable, axial-flow fan rotor 38 that configured to be surrounded by an annular fan casing 40. In particular embodiments, the (LP) drive shaft 34 may be connected directly to the fan rotor 38 such as in a direct-drive configuration. In alternative configurations, the (LP) drive shaft 34 may be connected to the fan rotor 38 via a speed reduction device 37 such as a reduction gear gearbox in an indirect-drive or geared-drive configuration. Such speed reduction devices may be included between any suitable shafts / spools within engine 10 as desired or required.

It should be appreciated by those of ordinary skill in the art that the fan casing 40 may be configured to be supported relative to the core engine 14 by a plurality of substantially radially-extending, circumferentially-spaced outlet guide vanes 42. As such, the fan casing 40 may enclose the fan rotor 38 and its corresponding fan rotor blades 44. Moreover, a downstream section 46 of the fan casing 40 may extend over an outer portion of the core engine 14 so as to define a secondary, or by-pass, airflow conduit 48 that provides additional propulsive jet thrust.

During operation of the engine 10, it should be appreciated that an initial air flow (indicated by arrow 50) may enter the engine 10 through an associated inlet 52 of the fan casing 40. The air flow 50 then passes through the fan blades 44 and splits into a first compressed air flow (indicated by arrow 54) that moves through conduit 48 and a second compressed air flow (indicated by arrow 56) which enters the booster compressor 22. The pressure of the second compressed air flow 56 is then increased and enters the high pressure compressor 24 (as indicated by arrow 58). After mixing with fuel and being combusted within the combustor 26, the combustion products 60 exit the combustor 26 and flow through the first turbine 28. Thereafter, the combustion products 60 flow through the second turbine 32 and exit the exhaust nozzle 36 to provide thrust for the engine 10.

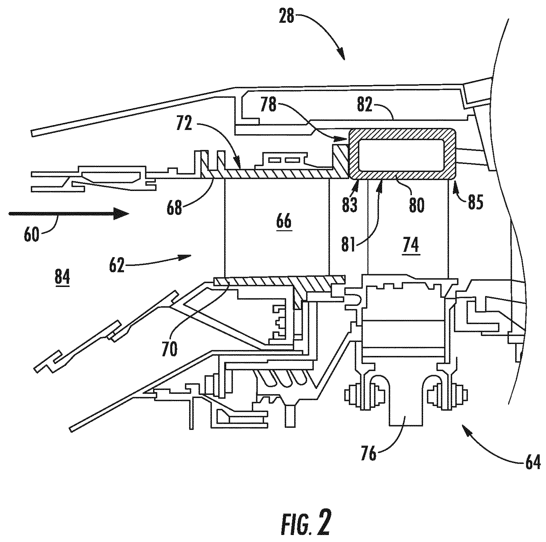

Referring now to FIG. 2, a partial, cross-sectional view of the first (or high pressure) turbine 28 described above with reference to FIG. 1 is illustrated in accordance with embodiments of the present subject matter. As shown, the first turbine 28 may include a first stage turbine nozzle 62 and a first stage turbine rotor 64. The nozzle 62 may generally be defined by an annular flow channel that includes a plurality of radially-extending, circularly-spaced nozzle vanes 66 (one of which is shown). The vanes 66 may be supported between a number of arcuate outer bands 68 and arcuate inner bands 70. As is generally understood, the vanes 66, outer bands 68 and inner bands 70 may be arranged into a plurality of circumferentially adjoining nozzle segments 72 to form a complete 360 degree assembly, with the outer and inner bands 68, 70 of each nozzle segment 72 generally defining the outer and inner radial flow path boundaries, respectively, for the combustion products (indicated by arrow 60) flowing through the nozzle 72 along the hot gas path of the engine 10.

Additionally, the first stage turbine rotor 64 may include a plurality of circumferentially spaced rotor blades 74 (only one of which is shown in FIG. 2) extending radially outwardly from a rotor disk 76 that rotates about the centerline axis 12 (FIG. 1) of the engine 10. Additionally, a turbine shroud 78 may be positioned immediately adjacent to the radially outer tips of the rotor blades 74 so as to define the outer radial flowpath boundary for the combustion products 60 flowing through the turbine rotor 64 along the hot gas path of the engine 10. The turbine shroud 78 may generally be formed by a plurality of arcuate shroud segments 80 (one of which is shown in FIG. 2), with the shroud segments 80 being arranged circumferentially in an annular array about the centerline axis 12 so as to form a complete 360 degree assembly. As shown in FIG. 2, in several embodiments, each shroud segment 80 may be configured as a "box" shroud segment and, thus, may define a generally rectangular cross-sectional profile. As is generally understood, the shroud segments 80 may, in certain instances, be radially retained relative to the rotor blades 74 via a shroud hanger 82 or other suitable stationary structure that allows for coupling the shroud segments 80 to a casing of the gas turbine engine 10.

During operation, hot gases of combustion 60 may flow in an axial direction from a combustion zone 84 of the combustor 26 (FIG. 1) into the annular, first stage turbine nozzle 62. The nozzle vanes 66 of the first stage turbine nozzle 62 may generally be configured to turn or direct the hot gases so that the flow angularly impinges upon the rotor blades 74 of the first stage rotor 64. The flow of hot gases around the annular array of rotor blades 74 may result in rotation of the turbine rotor 64, which may then rotationally drive the shaft (e.g., the first drive shaft 30 shown in FIG. 1) to which the rotor 64 is coupled.

It should be appreciated that, although only the first stage of the high pressure turbine 28 was generally described above, the turbine 28 may also include any number of follow-up stages including any number of corresponding, sequential annular arrays of nozzle vanes and turbine blades. Similarly, the low pressure turbine 32 (FIG. 1) may also include a similar configuration, with one or more stages of sequential annular arrays of nozzle vanes and turbine blades.

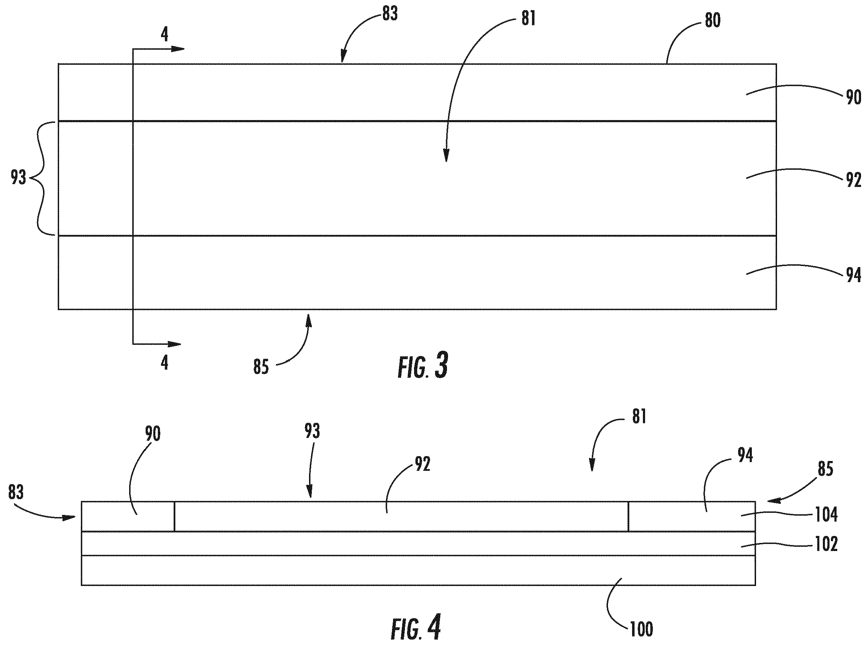

FIGS. 3 and 4 show an exemplary variable density coating system 81 positioned on the shroud 80. FIG. 4 shows that the variable density coating system 81 includes a component 100, an internal coating 102, and an external coating 104. Together the internal coating 102 and the external coating 104 for an environmental barrier coating (EBC) and/or a thermal barrier coating (TBC) on the component 100. For example, the component 100 can be a CMC substrate, and the internal coating 102 and the external coating 104 can form an EBC thereon. Alternatively, the component 100 can be an alloy substrate, and the internal coating 102 and the external coating 104 can form a TBC thereon. It is to be understood that the internal coating 102 and/or the external coating 104 can be formed from any suitable number of layers typically present in an EBC or TBC. For example, when forming a EBC on a CMC surface, the internal coating 102 can include a bond coat layer, one or more a rare earth silicate layers, etc.

In the embodiment shown, the external coating 104 has a first density area 90 along the lead edge 83 of the shroud 80, a second density area 92 along the blade track portion 93, and a third density area 94 along its trailing edge 85 of the shroud 80. Although shown with three separate density areas 90, 92, 94, it is to be understood that any suitable number of separate density areas can be utilized as desired. That is, the external coating 104 can include "N" density areas of porosity, where N is the number of density areas and can be varied to any number according to the design desired for the particular application.

The first density area 90 and the third density area 94 have, in one embodiment, porosity values that are less than the porosity of the second density area 92. That is, the first density area 90 and the third density area 94 are more dense than the second density area 92 For example, the first density area 90 and the second density area 94 can have a porosity that is, independently, less than 10% porosity. Conversely, the third density area 92 can have a porosity of about 20% to about 30%. In this embodiment, the blade-shroud rub ratio that describes the material lost from each component at a rub event can be controlled through coating microstructure. Thus, the soft material is isolated in the blade track portion 93 (i.e., greater porosity, less dense), while the first density area 90 remains sufficiently dense to protect the lead edge 83 from excessive erosion (i.e., less porosity, more dense).

In one embodiment, the porosity in the transition between adjacent density areas (e.g., between the first density area 90 and the second density area 92) is tapered from the porosity of one to the other (e.g., from the porosity of the first density area 90 to the porosity of the second density area 92). For example, the transition of porosity can be a linear-like transition from the porosity of the first density area 90 to the porosity of the second density area 92. Alternatively, the porosity in the transition between adjacent density areas (e.g., between the first density area 90 and the second density area 92) is stepped from the porosity of one to the other through a series of intermediate density areas.

The external coating 104 can be formed according to any suitable method. For example, the porosity of the external coating 104 can be varied through a HVOF/Thermal spray process; through the use of a filler material that will burn out at subsequent furnace operations (i.e., the amount, size, and distribution of the filler material drives the resulting porosity); through the use of different chemistry/materials of raw powder that will impact porosity; by masking different regions will create the specific regions; through control of the spray region; through different pre-heat and application temperatures to impact porosity; etc.

In one embodiment, the internal coating 102 and the external coating 104 forms an environmental barrier coating (EBC). For example, the internal coating 102 can be a bond coat (e.g., comprising silicon or silica). The external coating 104 can be a plurality of layers formed from one or more rare earth silicates. For example, the external coating 104 can include one or more of a mullite layer, a mullite-alkaline earth aluminosilicate mixture layer, an yttrium monosilicate (YMS) layer, an ytterbium doped yttrium disilicate (YbYDS) layer, a barium strontium aluminosilicate (BSAS) layer, etc. In such an embodiment, the external layer 104 generally serves as an environmental barrier to provide protection against steam recession and molten dust.

In one particular embodiment, the each density area in the external coating 104 has a chemical composition and/or layering that is substantially identical throughout the external coating 104, but for density. That is, the first density area has a chemical composition that is substantially identical to the second density area, the third density area, etc., but for density (i.e., porosity).

Although shown with the separate density areas 90, 92, 94 oriented with respect to the blade path, it is to be understood that any suitable orientation of the separate density areas can be utilized as desired. For example, a separate density area can be utilized at a "hot spot" on the component to better thermally isolate the underlying component from the hot gas path.

Additionally, it is to be understood that the variable density coating system could be utilized on any component, and is not limited to a shroud. For example, the variable density coating system can be applied to blades, vanes, nozzles, or other parts of the engine where an EBC or TBC is present.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A variable density coating system (81) on a component (100), the variable density coating system (81) comprising:
an external coating (104) on the component (100), wherein the external coating (104) has a first density area (90) and a second density area (92), and wherein the first density area (90) is more dense than the second density area (92).

2. The variable density coating system (81) as in claim 1, wherein the component (100) is a CMC component, and wherein the external coating (104) comprises a rare earth silicate.

3. The variable density coating system (81) as in claim 1, further comprising:
an internal coating (102) positioned between the component (100) and the external coating (104).

4. The variable density coating system (81) as in claim 1, wherein the external coating (104) also has a third density area (94) that is more dense than the second density area (92), wherein the second density area (92) is positioned between the first coating area (90) and the third coating area (94).

5. The variable density coating system (81) as in claim 4, wherein the component (100) is a shroud (78) of a gas turbine engine (10), and wherein the first coating area (90) covers a leading edge (83) of the shroud (78), the second coating area (92) covers a blade track portion (93) of the shroud (78), and the third coating area (94) covers a trailing edge (85) of the shroud (78).

6. The variable density coating system (81) as in claim 1, wherein the transition between the first density area (90) and the second density area (92) is tapered.

7. The variable density coating system (81) as in claim 1, wherein the first density area (90) has a chemical composition that is substantially identical to the second density area (92), but for density.

8. A gas turbine engine (10), comprising:
a compressor (24);
a combustion (26);
a turbine (28); and
a turbine shroud (78) disposed in one of the compressor (24) or the turbine (28), the turbine shroud (78) comprising a ceramic matrix composite having an external coating (104) thereon, wherein the external coating (104) has a first density area (90) and a second density area (92), and wherein the first density area (90) is more dense than the second density area (92).

9. The gas turbine engine (10) as in claim 8, further comprising:
a rotor blade (74) disposed in one of the compressor (24) or the turbine (28), the rotor blade (74) defining a radially outer tip such that the turbine shroud (78) is positioned immediately adjacent to the radially outer tip, wherein the second density area (92) defines a blade track area (93) that corresponds to the path of travel of the radially outer tip.

10. The gas turbine engine (10) as in claim 8, wherein the external coating (104) has a chemical composition that is substantially identical throughout, but for density, and wherein the transition between the first density area (90) and the second density area (92) is tapered.
